# FASCICULE DE BREVET EUROPEEN

(11) **EP 1 819 532 B1**
(45) Date de publication et mention de la délivrance du brevet: **27.08.2008**
(21) Numéro de dépôt: 05819311.1
(22) Date de dépôt: 02.12.2005
(51) Int. Cl.: B60C 23/00, B60C 23/04

(54) **ELEMENT DE LA LIAISON AU SOL D'UN VEHICULE, PNEUMATIQUE ET LIAISON AU SOL D'UN VEHICULE**
FAHRZEUGBODENKONTAKTELEMENT, REIFEN UND FAHRZEUGBODENKONTAKT
VEHICLE GROUND CONTACT ELEMENT, TIRE AND A VEHICLE GROUND CONTACT

(30) Priorité: 02.12.2004 FR 0412828
(43) Date de publication de la demande: 22.08.2007
(73) Titulaire: Société de Technologie Michelin, 63000 Clermont-Ferrand (FR); Michelin Recherche et Technique S.A., 1763 Granges-Paccot (CH)
(72) Inventeur: FAGOT-REVURAT, Lionel, F-63260 USSEL DE VENSAT (FR)
(74) Mandataire: Le Cam, Stéphane Georges Elie
(86) Numéro de dépôt international: PCT/EP2005/056412
(87) Numéro de publication internationale: WO 2006/058917

(56) Documents cités:
- WO-A-20/04074016
- US-A1- 2002 121 132

## Description

La présente invention concerne un élément de la liaison au sol d'un véhicule, comportant au moins deux systèmes de mesure de paramètres physiques pour communiquer avec un dispositif d'interrogation par exemple placé sur le véhicule.

L'invention se rapporte plus spécifiquement à un pneumatique et concerne encore une liaison au sol d'un véhicule.

L'invention se rapporte à des éléments de la liaison au sol de tout type de véhicule, tel que automobile, motocyclette, poids-lourds, engin agricole ou de génie civil.

Bien que non limité à une telle application, l'invention sera plus particulièrement décrite en référence à un pneumatique.

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

Un plan radial contient l'axe de rotation du pneumatique.

Les performances d'un pneumatique que sont notamment l'adhérence, l'endurance, la résistance à l'usure, le confort en roulage sont liées à différents éléments du pneumatique tels que le choix d'une architecture sommet, le choix et la nature des mélanges caoutchouteux constituant les différentes parties du pneumatique. Par exemple, la nature des mélanges caoutchouteux constituant la bande de roulement interviennent sur les propriétés dudit pneumatique telles que les propriétés d'usure et d'adhérence.

Par ailleurs, il est également connu de l'homme du métier que les propriétés physico-chimiques des mélanges caoutchouteux varient avec l'usage qui est fait du pneumatique et notamment en fonction de la température, qui a par exemple une influence sur les propriétés de la bande de roulement d'un pneumatique. Ainsi, lors de l'utilisation d'un véhicule, les mélanges caoutchouteux formant les différentes parties du pneumatique telles que les zones basses, les flanc, la bande de roulement sont soumis à des sollicitations qui conduisent à une élévation de température des mélanges et donc à des variations des propriétés physico-chimiques desdits mélanges. Il est par exemple connu que selon le type de pneumatique et son usage, certaines zones du pneumatique sont soumises à des contraintes telles que les températures atteintes peuvent conduire à des performances d'adhérence ou d'usure du pneumatique qui ne sont pas optimales.

Il est ainsi souhaitable de pouvoir effectuer des mesures de température ou bien d'un autre paramètre physique du pneumatique et notamment des masses caoutchouteuses qui le constituent notamment pour aider le conducteur ou pilote du véhicule à adapter sa conduite aux conditions et ainsi optimiser les performances du pneumatique. Le document US 2002/0121132 decrit la liaison au sol d'un véhicule telle que revendiquée dans les préambules des revendications 1, 8 et 16.

Il est connu, notamment du document EP 1 275 949, d'implanter un capteur sans fil dans les pneumatiques pour déterminer des forces ou contraintes s'exerçant au sein du pneumatique.

Le document EP 0 937 615 décrit quant à lui l'utilisation de capteurs sans fil à onde acoustique de surface intégrés dans un pneumatique notamment pour la mesure de l'adhérence d'un pneumatique. Un tel capteur présente l'avantage de pouvoir être interrogé à distance, par onde radiofréquence, sans-fil, sans qu'une source d'énergie proche soit nécessaire. L'énergie de l'onde radio d'interrogation envoyée par un dispositif d'interrogation à distance est suffisante pour que le capteur envoie une onde radio modifiée en réponse.

Les capteurs sans fil à onde acoustique de surface de type SAW (Surface Acoustic Wave) ou bien à onde acoustique de volume de type BAW (Bulk Acoustic Wave) peuvent ainsi être utilisés dans des pneumatiques pour effectuer des mesures de paramètres physiques. Un avantage important est qu'ils peuvent être interrogés à distance par onde radio, sans qu'une source d'énergie proche leur soit nécessaire.

Par contre, dans le cas des capteurs SAW ou BAW de type résonateur, a contrario des capteurs SAW ou BAW de type ligne à retard, dès lors qu'au moins deux dispositifs de mesure de ce type, utilisant la même bande de fréquence, sont insérés dans un pneumatique, un dispositif d'interrogation associé n'est pas en mesure d'identifier la provenance des signaux qu'il reçoit et donc d'identifier le capteur avec lequel il communique. En effet, l'utilisation de plusieurs capteurs SAW ou BAW de type résonateur ne permet pas l'émission par chacun d'eux de signaux autorisant leur identification lorsqu'ils travaillent dans la même bande de fréquence.

L'invention a ainsi pour but de fournir un élément de la liaison au sol d'un véhicule, tel qu'un pneumatique, apte à communiquer avec un dispositif d'interrogation attaché au véhicule, ledit élément comportant au moins deux systèmes de mesure de paramètres physiques, lesdits systèmes n'étant pas identifiables par le signal qu'ils émettent.

Ce but a été atteint selon l'invention par un élément de la liaison au sol d'un véhicule comportant au moins deux systèmes de mesure de paramètres physiques, chaque système de mesure comportant une antenne polarisée linéairement, les directions de polarisation des antennes formant entre elles un angle compris entre 30 et 90°.

Selon une réalisation préférée de l'invention, l'élément de la liaison au sol étant constitué pour partie d'au moins une masse polymérique, au moins un système de mesure est noyé dans une masse polymérique.

Une variante préférée de l'invention concerne au moins deux systèmes noyés dans au moins une masse polymérique.

D'autres réalisations selon l'invention concernent, des éléments de la liaison au sol d'un véhicule auquel les capteurs sont associés ; il s'agit par exemple de capteurs fixés dans la cavité d'un pneumatique.

Selon une réalisation préférée de l'invention, les systèmes sont des systèmes de mesure sans fil par technologie à onde acoustique de surface ou onde acoustique de volume.

L'invention est particulièrement avantageuse lorsque les systèmes de mesure sont identiques. Elle permet effectivement de sélectionner le capteur avec lequel la communication doit être établie lorsque par exemple deux capteurs sont noyés dans des masses polymériques différentes de l'élément.

Durant les essais, il a été mis en évidence que notamment dans le cas où deux capteurs SAW ou BAW de type résonateur sont présents dans un élément de la liaison au sol d'un véhicule, le choix d'orientation de la direction de polarisation des antennes l'une par rapport à l'autre autorise effectivement la sélection de l'un ou l'autre des capteurs à partir des signaux échangés avec un dispositif d'interrogation adapté pour ces deux orientations. Avantageusement, le dispositif d'interrogation est prévu pour interroger les capteurs l'un après l'autre.

La mise en place d'au moins deux capteurs dans un élément va donc permettre par exemple d'effectuer des mesures d'un même paramètre en différents endroits de l'élément.

Les capteurs de type SAW et BAW présentent également l'avantage d'autoriser des mesures fréquentes et à haute vitesse, et assurent ainsi une information fréquente et rapide sur l'état d'un élément. Par exemple, dans le cas d'un pneumatique dans lequel est inséré un tel capteur, celui-ci peut être interrogé fréquemment sous réserve que le couplage électromagnétique entre le capteur et le dispositif d'interrogation lié au véhicule s'effectue régulièrement. L'invention présente alors l'avantage lorsqu'au moins deux capteurs sont mis en place dans un même plan longitudinal d'augmenter la probabilité d'obtenir un couplage entre un capteur et le dispositif d'interrogation en ayant en outre l'avantage de pouvoir identifier l'origine du signal reçu. Dans une variante de réalisation ne permettant pas une interrogation rapide d'un même capteur, l'augmentation du nombre de capteur autorise une augmentation de la fréquence de mesure ; une telle variante est notamment intéressante dans le cas d'un freinage d'urgence, le pneumatique étant équipé comme précédemment d'au moins deux capteurs mis en place dans un même plan longitudinal.

Selon un premier mode de réalisation de l'invention, l'élément, constitutif d'un ensemble monté comprenant une roue et un pneumatique, est une partie de la roue.

Selon un deuxième mode de réalisation de l'invention, l'élément, constitutif d'un ensemble monté comprenant une roue et un pneumatique, est une partie du pneumatique. Au moins un capteur est alors avantageusement inséré dans une masse caoutchouteuse constitutive du pneumatique ; selon la destination de ce pneumatique ou plus exactement le véhicule auquel il est destiné, l'élément sera noyé dans une masse caoutchouteuse de la bande de roulement, d'un flanc ou bien d'une zone basse.

Selon un troisième mode de réalisation de l'invention, l'élément, constitutif d'un ensemble monté comprenant une roue, un pneumatique et un organe de support du pneumatique pour une utilisation notamment en mode dégradé, est une partie de l'organe de support.

Un tel organe de support est par exemple un appui sur le quel le pneumatique repose en cas de perte de pression ; un tel appui est par exemple décrit dans le document EP 0 314 988. Il peut encore s'agir d'un boudin mousse, tel que le produit commercialisé sous la marque « Bib mousse » par la société MICHELIN. Un tel élément remplit la cavité de l'ensemble monté ; il est notamment utilisé pour des véhicules de compétition en rallye. La connaissance de la température dans des zones prédéterminées de ces éléments peut donner une information soit sur l'état de l'ensemble monté soit sur l'état de l'élément lui-même.

Quel que soit le type d'élément de la liaison au sol considéré, les informations sur les paramètres mesurées sont échangées par ondes radio avec au moins un dispositif d'interrogation, par exemple fixé sur le véhicule pour apporter ces informations au conducteur du véhicule. Ces informations mises à disposition du conducteur peuvent par exemple lui permettre d'adapter la conduite du véhicule pour conserver des performances optimales.

L'invention propose également un pneumatique comportant au moins une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, les bourrelets, les flancs et la bande de roulement étant constitués pour partie de masses caoutchouteuses, ledit pneumatique comportant au moins deux systèmes de mesure de paramètres physiques comportant des antennes polarisées linéairement, les directions de polarisation des antennes formant entre elles un angle compris entre 30 et 90°.

Selon un mode de réalisation avantageux de l'invention, les systèmes sont noyés dans au moins une masse caoutchouteuse.

Selon une réalisation préférée de l'invention, les systèmes sont des systèmes de mesure sans fil par technologie à onde acoustique de surface ou onde acoustique de volume.

De préférence encore, les systèmes de mesure sont identiques.

Selon un premier mode de réalisation du pneumatique selon l'invention, le système de mesure est noyé dans une partie de la bande de roulement. Selon le type de véhicule pour lequel est prévu le pneumatique, différentes zones de la bande de roulement peuvent être contrôlée. Par exemple dans le cas d'une motocyclette, il peut notamment être utile de faire une mesure de température au sommet du pneumatique, c'est-à-dire dans le plan équatorial du pneumatique. En effet cette zone de la bande de roulement peut par exemple être fortement sollicitée dans le cas de vitesses importantes en ligne droite pendant des temps importants. Dans un autre exemple, qui est celui des poids lourds, le système de mesure peut par exemple être noyé dans une partie des extrémités axialement extérieures de la bande de roulement, cette zone étant aussi appelée épaule du pneumatique. Il est effectivement connu de l'homme du métier que les épaules du pneumatique sont soumises à des sollicitations pouvant conduire à un échauffement des masses caoutchouteuses pouvant modifier sensiblement les performances du pneumatique.

Selon un deuxième mode de réalisation du pneumatique selon l'invention, le système de mesure est noyé dans une partie d'un flanc. Une mesure de la température dans une zone du flanc peut notamment apporter une information importante dans le cas des véhicules de type génie civil qui présente de fortes flexions en roulage qui viennent solliciter certaines zones des flancs.

Selon un troisième mode de réalisation du pneumatique selon l'invention, le système de mesure est noyé dans une partie d'un bourrelet. Une telle application peut notamment être intéressante dans le cas des véhicules de type agricole du fait notamment des fortes flexions subies par ces pneumatiques.

Comme énoncé précédemment une telle réalisation permet de sélectionner le système communiquant avec un dispositif d'interrogation, par exemple associé au véhicule, lorsqu'au moins deux systèmes de mesure de paramètres physiques incorporés dans des zones de masses caoutchouteuses différentes.

Une telle réalisation d'un pneumatique selon l'invention peut être particulièrement intéressante dans le cas d'un véhicule de type motocyclette équipé de pneumatiques réalisés avec un taux de courbure le plus souvent supérieur à 0,2 pour être utilisé en carrossage. Les sollicitation exercées par exemple dans le plan équatorial de la bande de roulement et dans les parties axialement extérieures de la bande de roulement ne sont donc pas les mêmes puisque provoquées dans des conditions différentes. En effet, selon l'utilisation de la moto, soit en ligne droite, soit en courbe, la partie de la bande de roulement au contact du sol n'est pas la même et n'est pas sollicitée de la même manière. La mise en place de capteurs de température dans les différentes zones correspondantes, selon l'invention autorise une surveillance en continu de ces différentes zones du fait de la sélection rendue possible des capteurs.

De façon à faciliter la mise en place du ou des systèmes de mesure de paramètres physiques, le pneumatique selon l'invention est avantageusement réalisé selon une technique de fabrication du type sur noyau dur ou forme rigide telle qu'évoquée précédemment.

Un tel pneumatique ainsi réalisé selon une technique du type sur noyau dur ou toroïdal autorise notamment la mise en place des systèmes de mesure de paramètres physiques dans une position quasi-finale, une étape de conformation n'étant pas requise selon ce type de procédé, ladite position finale pouvant en outre être parfaitement identifiée. En effet, la fabrication du type sur noyau dur peut permettre d'insérer un système de mesure de paramètres physiques selon une indexation prédéterminée.

L'invention propose encore une liaison au sol d'un véhicule comprenant au moins deux éléments, au moins deux éléments comportant au moins un système de mesure de paramètres physiques, chaque système de mesure comportant une antenne polarisée linéairement, les directions de polarisation des antennes formant entre elles un angle compris entre 30 et 90°.

Selon une réalisation préférée de l'invention, au moins un élément de la liaison au sol étant constitué pour partie d'au moins une masse polymérique, au moins un système de mesure est noyé dans la masse polymérique.

Selon une réalisation préférée de l'invention, les systèmes sont des systèmes de mesure sans fil par technologie à onde acoustique de surface ou onde acoustique de volume.

De préférence encore, les systèmes de mesure sont identiques.

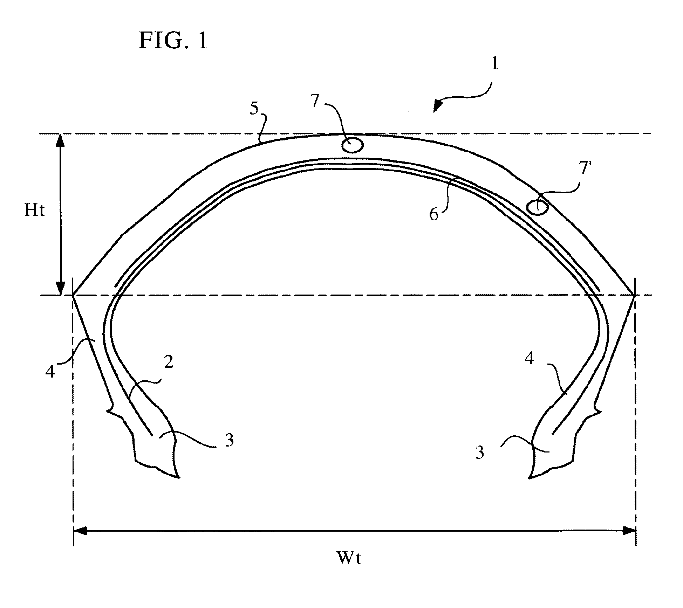

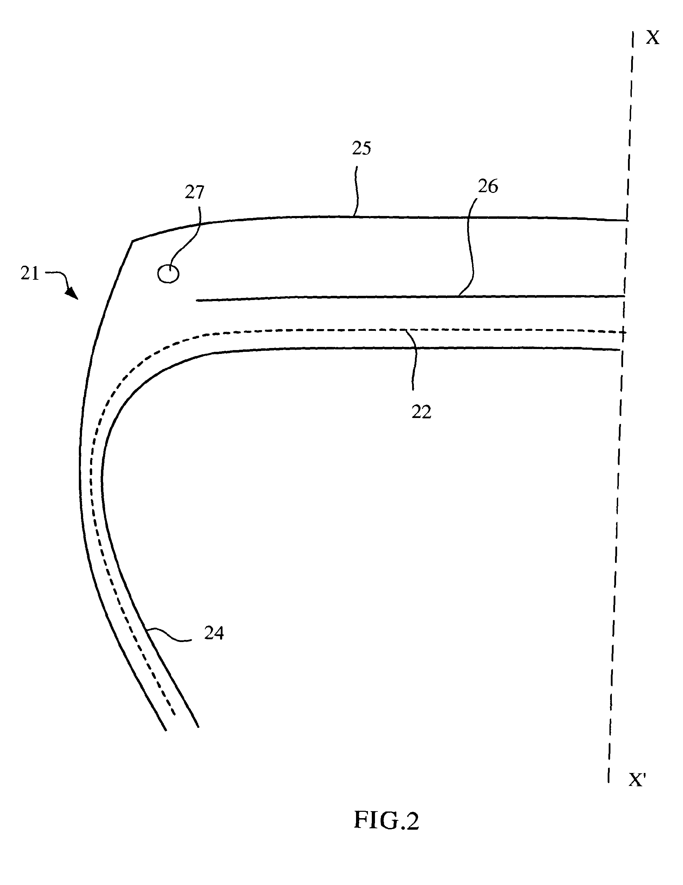

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention,
- figure 3, une vue en plan et écorché de la bande de roulement du pneumatique de la figure 1.
Les figures 1 à 3 ne sont pas représentées à l'échelle pour en simplifier la compréhension.

La figure 1 représente un pneumatique 1 destiné à être utilisé sur un véhicule de type motocyclette comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte encore une armature de sommet 6, dont le détail n'est pas représenté sur la figure 1. L'armature de sommet peut comporter au moins une couche d'éléments de renforcement parallèles entre eux et faisant avec la direction circonférentielle des angles aigus et/ou une couche d'éléments de renforcement circonférentiels. Dans le cas de l'armature de sommet d'un pneumatique comportant au moins deux couches d'éléments de renforcement faisant avec la direction circonférentielle des angles aigus lesdits éléments de renforcement sont croisés d'une couche à la suivante en faisant entre eux des angles compris 40 et 100°.

Conformément à l'invention, le pneumatique comporte deux systèmes 7, 7' de mesure de la température interne de la masse caoutchouteuse de la bande de roulement 5. Ces deux systèmes de mesure 7, 7' sont identiques ; il s'agit de capteurs de température sans fil, de type résonateur SAW (Surface Acoustic Wave). Ce type de capteur présente l'avantage, comme expliqué précédemment, de ne pas nécessiter d'alimentation associée ; il renseigne sur la température de la masse caoutchouteuse qui l'entoure en modifiant une onde qu'il reçoit et retransmet.

Dans le cas de la figure 1, le capteur 7 est placé dans le plan équatorial du pneumatique et va permettre de renseigner sur la température locale de la masse caoutchouteuse, c'est-à-dire sur la température de la masse caoutchouteuse directement au contact du capteur. La mise en place du capteur dans cette zone permet au conducteur ou pilote de la moto de surveiller ou d'être informé sur la température d'une zone susceptible de subir des variations de température considérables, notamment lors de roulage à grande vitesse en ligne droite.

Le second capteur 7' est mis en place dans une parties axialement extérieure de la bande de roulement 5 du pneumatique 1 et permet de donner des informations quant à la température interne de ladite partie axialement extérieure de la bande de roulement 5 qui se trouve au contact du sol lorsque la moto suit une trajectoire en courbe, le pneumatique 1 étant alors utilisé en carrossage.

Dans le cas de la figure 1, les deux capteurs 7, 7' sont mis en place dans le même plan radial. Il peut être préférable dans certaines situations d'incorporer les capteurs dans des plans radiaux différents pour éviter tout risque de perturbation.

Les deux capteurs de type résonateur SAW comportant des antennes polarisées linéairement sont mis en place de façon à ce que les directions de polarisation des antennes forment entre elles un angle de 90°.

Un dispositif d'interrogation est avantageusement prévu sur le véhicule pour communiquer avec les capteurs. Ledit dispositif d'interrogation est prévu pour autoriser un couplage électromagnétique avec chacun des capteurs et est prévu pour sélectionner le capteur avec lequel la communication doit être établie. Les informations ainsi reçues peuvent alors être communiquées au pilote. Pour communiquer avec chacun des capteurs, le dispositif d'interrogation peut par exemple comporter différentes antennes pouvant être couplées avec chacun des capteurs, le passage d'un couplage d'un capteur à un autre se faisant par exemple par un système de type commutation.

La figure 2 illustre un second mode de réalisation de l'invention plus particulièrement adapté au cas d'un véhicule de type poids lourd. La figure 2 ne représente qu'une vue partielle d'un demi pneumatique 21 qui se prolonge de manière symétrique par rapport à l'axe XX' qui représente le plan médian circonférentiel, ou plan équatorial, d'un pneumatique. Les zones basses et bourrelets du pneumatique 21 ne sont notamment pas représentés sur cette figure.

Sur cette figure 2, il a été choisi de noyer les capteurs 27 de type SAW dans des zones de la masse caoutchouteuse de la bande de roulement située au niveau axialement extérieur de la dite bande de roulement, usuellement appelées épaules du pneumatique. Il est en effet connu de l'homme du métier que ce type de pneumatique, notamment soumis à des charges importantes est amené à subir des contraintes qui dans des conditions extrêmes peuvent conduire à des élévations de température dans ces zones de la bande de roulement.

Le capteur 27 et le second capteur, non représenté sur la figure et positionné de manière symétrique au premier par rapport à l'axe XX', sont de type résonateur SAW, comportant des antennes polarisées linéairement, et identiques. Ils sont mis en place conformément à l'invention de sorte que les directions de polarisation des antennes forment entre elles un angle de 90°.

Comme dans le cas de la figure 1, le dispositif d'interrogation, non représenté sur la figure 2, associé au véhicule est prévu pour communiquer avec les deux capteurs dont les directions de polarisation des antennes forment entre elles un angle de 90°.

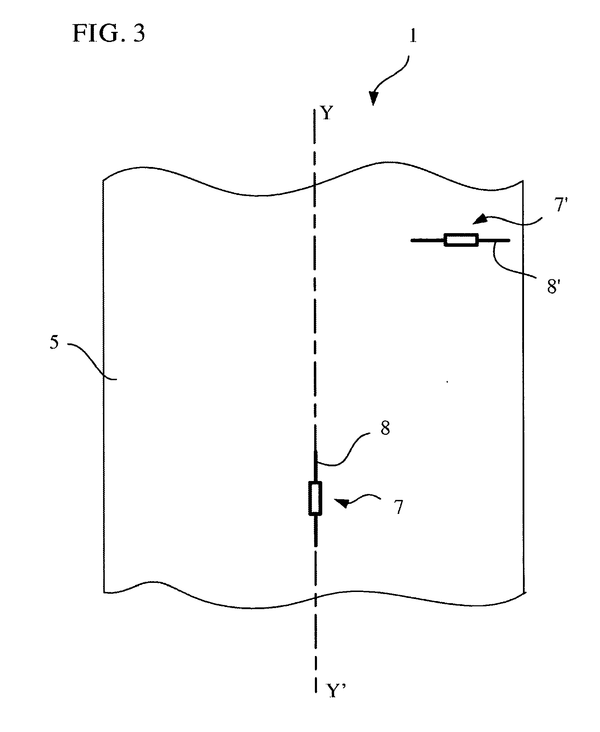

La figure 3 représente une vue en plan et en écorché de la bande de roulement 5 du pneumatique 1 de la figure 1 dans lequel les deux capteurs de mesure 7, 7' sont noyés dans des masses caoutchouteuses du pneumatique.

Le premier capteur 7 de mesure de la température, de type SAW, est mis en place dans la zone du plan équatorial YY' du pneumatique 1 et permet comme expliqué dans le cas de la figure 1 de donner des informations quant à la température interne de la partie de la bande de roulement 5 au contact du sol lorsque la moto suit une trajectoire rectiligne.

Le deuxième capteur 7' de mesure de la température, de type SAW, est mis en place dans une partie axialement extérieure de la bande de roulement 5 du pneumatique 1 et permet de donner des informations quant à la température interne de ladite partie axialement extérieure de la bande de roulement 5 qui se trouve au contact du sol lorsque la moto suit une trajectoire en courbe, le pneumatique 1 étant alors utilisé en carrossage.

Les informations relatives à la température mesurées au sein de la bande de roulement par chacun des capteurs de type résonateur SAW sont transmises à un dispositif d'interrogation, par exemple solidaire du véhicule. Comme il l'a déjà été dit précédemment les signaux réémis par les capteurs de type résonateur SAW ne permettent pas de sélectionner le capteur réémetteur. Selon l'invention, les directions de polarisation des antennes 8, 8' de chacun des capteurs 7, 7' forment entres elles un angle sensiblement égal à 90°. Ces directions de polarisation différentes de chacune des antennes nécessitent de prévoir des systèmes complexes d'émission et de réception au niveau du dispositif d'interrogation prévu sur le véhicule pour permettre une communication avec chacun des capteurs de type résonateur SAW implantés dans le pneumatique. En effet, la communication avec les capteurs ne peut être assurée que par un couplage électromagnétique satisfaisant entre chacun des capteurs et un dispositif d'interrogation adapté, par exemple tel que présenté précédemment. Un tel dispositif d'interrogation, par exemple associé au véhicule, va ainsi permettre de sélectionner le capteur du fait de la direction de polarisation des antennes.

## Revendications

1. Elément de la liaison au sol d'un véhicule comportant au moins deux systèmes (7,7') de mesure de paramètres physiques, chaque système de mesure comportant une antenne polarisée linéairement, **caractérisé en ce que** les directions de polarisation des antennes forment entre elles un angle compris entre 30 et 90°.

2. Elément de la liaison au sol d'un véhicule selon la revendication 1, ledit élément de la liaison au sol étant constitué pour partie de masses polymériques, **caractérisé en ce que** au moins un système de mesure (7,7') est noyé dans une masse polymérique.

3. Elément de la liaison au sol d'un véhicule selon la revendication 1 ou 2, **caractérisé en ce que** les systèmes (7,7') sont des systèmes de mesure sans fil par technologie à onde acoustique de surface ou onde acoustique de volume.

4. Elément de la liaison au sol d'un véhicule selon l'une des revendications 1 à 3, **caractérisé en ce que** les systèmes de mesure (7,7') sont identiques.

5. Elément de la liaison au sol d'un véhicule selon l'une des revendications 1 à 4, constitutif d'un ensemble monté comprenant une roue et un pneumatique (1), **caractérisé en ce que** l'élément est une partie de la roue.

6. Elément de la liaison au sol d'un véhicule selon l'une des revendications 1 à 4, constitutif d'un ensemble monté comprenant une roue et un pneumatique (1), **caractérisé en ce que** l'élément est une partie du pneumatique (1).

7. Elément de la liaison au sol d'un véhicule selon l'une des revendications 1 à 4, constitutif d'un ensemble monté comprenant une roue, un penumatique (1) et un organe de support du pneumatique pour une utilisation notamment en mode dégradé, **caractérisé en ce que** l'élément est une partie de l'organe de support.

8. Pneumatique (1) comportant au moins une structure de renfort de type carcasse, formée d'éléments de renforcement, ancrée de chaque côté du pneumatique à un bourrelet (3) dont la base est destinée à être montée sur un siège de jante, chaque bourrelet (3) se prolongeant radialement vers l'extérieur par un flano (4), les flancs rejoignant radialement vers l'extérieur une bande de roulement, les bourrelets (3), les flancs (4) et la bande de roulement (5) etant constitués pour partie de masses caoutchouteuses, ledit pneumatique (1) comportant au moins deux systèmes de mesure de paramètres physiques (7,7') comportant chacun des antennes polarisées linéairement, **caractérisé en ce que** les directions de polarisation des antennes forment entre elles un angle compris entre 30 et 90'.

9. Pneumatique selon la revendication 8, **caractérisé en ce que** les systèmes (7,7') sont noyés dans au moins une masse caoutchouteuse.

10. Pneumatique selon la revendication 8 ou 9, **caractérisé en ce que** les systèmes (7,7') sont des systèmes de mesure sans fil par technologie à onde acoustique de surface ou onde acoustique de volume.

11. Pneumatique selon l'une des revendications 8 à 10, **caractérisé en ce que** les systèmes de mesure (7,7') sont identiques.

12. Pneumatique selon l'une des revendications 8 à 11, **caractérisé en ce qu'**au moins un système de mesure (7,7') est noyé dans une partie de la bande de roulement.

13. Pneumatique selon l'une des revendications 8 à 12, **caractérisé en ce qu'**au moins un système de mesure est noyé dans une partie des extrémités axialement extérieures de la bande de roulement (5).

14. Pneumatique selon l'une des revendications 8 à 13, **caractérisé en ce qu'**au moins un système de mesure est noyé dans une partie d'un flanc (4).

15. Pneumatique selon l'une des revendications 8 à 14, **caractérisé en ce qu'**au moins un système de mesure est noyé dans une partie d'un bourrelet (3).

16. Liaison au sol d'un véhicule comprenant au moins deux éléments, au moins deux desdits éléments comportant au moins un système de mesure de paramètres physiques (7,7'), chaque système de mesure comportant une antenne polarisée linéairement, **caractérisé en ce que** les directions de polarisation des antennes forment entre elles un angle compris entre 30 et 90°.

17. Liaison au sol d'un véhicule selon la revendication 16, au moins un desdits deux éléments étant constitué pour partie de masses polymériques, **caractérisé en ce que** au moins un système de mesure (7,7') est noyé dans une masse polymérique.

18. Liaison au sol d'un véhicule selon la revendication 16 ou 17, **caractérisé en ce que** les systèmes (7,7') sont des systèmes de mesure sans fil par technologie à onde acoustique de surface ou onde acoustique de volume.

19. Liaison au sol d'un véhicule selon l'une des revendications 16 à 18, **caractérisé en ce que** les systèmes de mesure (7,7') sont identiques.

## Claims

1. A ground-contacting component of a vehicle, comprising at least two physical parameter measurement systems (7, 7'), each measurement system having a linearly polarized antenna, **characterized in that** the polarization directions of the antennas make an angle of between 30 and 90° between them.

2. The ground-contacting component of a vehicle as claimed in claim 1, when said ground-contacting component consists partly of polymeric compounds, **characterized in that** at least one measurement system (7, 7') is embedded in a polymeric compound.

3. The ground-contacting component of a vehicle as claimed in claim 1 or 2, **characterized in that** the systems (7, 7') are wireless measurement systems based on surface acoustic wave or bulk acoustic wave technology.

4. The ground-contacting component of a vehicle as claimed in one of claims 1 to 3, **characterized in that** the measurement systems (7, 7') are identical.

5. The ground-contacting component of a vehicle as claimed in one of claims 1 to 4, which is a constituent of a mounted assembly comprising a wheel and a tire (1), **characterized in that** the component is part of the wheel.

6. The ground-contacting component of a vehicle as claimed in one of claims 1 to 4, which is a constituent of a mounted assembly comprising a wheel and a tire (1), **characterized in that** the component is part of the tire (1).

7. The ground-contacting component of a vehicle as claimed in one of claims 1 to 4, which is a constituent of a mounted assembly comprising a wheel, a tire (1) and a support member for supporting the tire in particular for use in degraded mode, **characterized in that** the component is part of the support member.

8. A tire (1) comprising at least one carcass reinforcement structure formed from reinforcing elements and anchored on each side of the tire to a bead (3), the base of which is intended to be mounted on a rim seat, each bead (3) being radially outwardly extended by a sidewall (4), the sidewalls radially outwardly joining a tread, the beads (3), the sidewalls (4) and the tread (5) consisting partly of rubber compounds, said tire (1) comprising at least two physical parameter measurement systems (7, 7'), each having linearly polarized antennas, **characterized in that** the polarization directions of the antennas make an angle of between 30 and 90° between them.

9. The tire as claimed in claim 8, **characterized in that** the systems (7, 7') are embedded in at least one rubber compound.

10. The tire as claimed in claim 8 or 9, **characterized in that** the systems (7, 7') are wireless measurement systems based on surface acoustic wave or bulk acoustic wave technology.

11. The tire as claimed in one of claims 8 to 10, **characterized in that** the measurement systems (7, 7') are identical.

12. The tire as claimed in one of claims 8 to 11, **characterized in that** at least one measurement system (7, 7') is embedded in a part of the tread.

13. The tire as claimed in one of claims 8 to 12, **characterized in that** at least one measurement system is embedded in a part of the axially outer ends of the tread (5).

14. The tire as claimed in one of claims 8 to 13, **characterized in that** at least one measurement system is embedded in a part of a sidewall (4).

15. The tire as claimed in one of claims 8 to 14, **characterized in that** at least one measurement system is embedded in a part of a bead (3).

16. A vehicle ground contact, comprising at least two elements, with at least two of said elements comprising at least one physical parameter measurement system (7, 7'), each measurement system having a linearly polarized antenna, **characterized in that** the polarization directions of the antennas make an angle of between 30 and 90° between them.

17. The vehicle ground contact as claimed in claim 16, at least one of said two elements consisting partly of polymeric compounds, **characterized in that** at least one measurement system (7, 7') is embedded in a polymeric compound.

18. The vehicle ground contact as claimed in claim 16 or 17, **characterized in that** the systems (7, 7') are wireless measurement systems based on surface acoustic wave or bulk acoustic wave technology.

19. The vehicle ground contact as claimed in one of claims 16 to 18, **characterized in that** the measurement systems (7, 7') are identical.

## Patentansprüche

1. Element für den Kontakt eines Fahrzeugs mit dem Boden, das wenigstens zwei Systeme (7, 7') zum Messen physikalischer Parameter enthält, wobei jedes Messsystem eine linear polarisierte Antenne enthält, **dadurch gekennzeichnet, dass** die Polarisationsrichtungen der Antenne zueinander einen Winkel im Bereich von 30 bis 90° bilden.

2. Element für den Kontakt eines Fahrzeugs mit dem Boden nach Anspruch 1, wobei das Bodenkontaktelement zum Teil aus Polymermassen gebildet ist, **dadurch gekennzeichnet, dass** wenigstens ein Messsystem (7, 7') in eine Polymermasse eingebettet ist.

3. Element für den Kontakt eines Fahrzeugs mit dem Boden nach Anspruch 1 oder 2, **dadurch gekennzeichnet, dass** die Systeme (7, 7') drahtlose Messsysteme in Oberflächenschallwellen- oder Volumenschallwellen-Technologie sind.

4. Element für den Kontakt eines Fahrzeugs mit dem Boden nach einem der Ansprüche 1 bis 3, **dadurch gekennzeichnet, dass** die Messsysteme (7, 7') völlig gleich sind.

5. Element für den Kontakt eines Fahrzeugs mit dem Boden nach einem der Ansprüche 1 bis 4, das aus einer Montageanordnung gebildet ist, die ein Rad und einen Luftreifen (1) enthält, **dadurch gekennzeichnet, dass** das Element ein Teil des Rades ist.

6. Element für den Kontakt eines Fahrzeugs mit dem Boden nach einem der Ansprüche 1 bis 4, das aus einer Montageanordnung gebildet ist, die ein Rad und einen Luftreifen (1) enthält, **dadurch gekennzeichnet, dass** das Element ein Teil des Luftreifens (1) ist.

7. Element für den Kontakt eines Fahrzeugs mit dem Boden nach einem der Ansprüche 1 bis 4, das aus einer Montageanordnung gebildet ist, die ein Rad, einen Luftreifen (1) und ein Luftreifenunterstützungsorgan, das insbesondere im Notbetrieb verwendet wird, enthält, **dadurch gekennzeichnet, dass** das Element ein Teil des Unterstützungsorgans ist.

8. Luftreifen (1), der wenigstens eine Verstärkungsstruktur des Karkassentyps enthält, die aus Verstärkungselementen gebildet ist, die beiderseits des Luftreifens an einem Wulst (3) verankert sind, dessen Basis dazu bestimmt ist, an einem Felgensitz montiert zu werden, wobei jeder Wulst (3) radial auswärts durch eine Flanke (4) verlängert ist, wobei die Flanken radial außen durch eine Lauffläche verbunden sind, wobei die Wulste (3), die Flanken (4) und die Lauffläche (5) zum Teil aus Kautschukmassen gebildet sind, wobei der Luftreifen (1) wenigstens zwei Systeme (7, 7') zum Messen physikalischer Parameter enthält, die jeweils linear polarisierte Antennen enthalten, **dadurch gekennzeichnet, dass** die Polarisationsrichtungen der Antennen zueinander einen Winkel im Bereich von 30 bis 90° bilden.

9. Luftreifen nach Anspruch 8, **dadurch gekennzeichnet, dass** die Systeme (7, 7') in wenigstens eine Kautschukmasse eingebettet sind.

10. Luftreifen nach Anspruch 8 oder 9, **dadurch gekennzeichnet, dass** die Systeme (7, 7') drahtlose Messsysteme in Oberflächenschallwellen- oder Volumenschallwellen-Technologie sind.

11. Luftreifen nach einem der Ansprüche 8 bis 10, **dadurch gekennzeichnet, dass** die Messsysteme (7, 7') völlig gleich sind.

12. Luftreifen nach einem der Ansprüche 8 bis 11, **dadurch gekennzeichnet, dass** wenigstens ein Messsystem (7, 7') in einen Teil der Lauffläche eingebettet ist.

13. Luftreifen nach einem der Ansprüche 8 bis 12, **dadurch gekennzeichnet, dass** wenigstens ein Messsystem in einen Teil der axial äußeren Enden der Lauffläche (5) eingebettet ist.

14. Luftreifen nach einem der Ansprüche 8 bis 13, **dadurch gekennzeichnet, dass** wenigstens ein Messsystem in einen Teil einer Flanke (4) eingebettet ist.

15. Luftreifen nach einem der Ansprüche 8 bis 14, **dadurch gekennzeichnet, dass** wenigstens ein Messsystem in einen Teil eines Wulstes (3) eingebettet ist.

16. Bodenverbindung eines Fahrzeugs, die wenigstens zwei Elemente enthält, wobei wenigstens zwei der Elemente wenigstens ein System (7, 7') zum Messen physikalischer Parameter enthält, wobei jedes Messsystem eine linear polarisierte Antenne enthält, **dadurch gekennzeichnet, dass** die Polarisationsrichtungen der Antennen zueinander einen Winkel im Bereich von 30 bis 90° bilden.

17. Bodenverbindung eines Fahrzeugs nach Anspruch 16, wobei wenigstens eines der zwei Elemente zum Teil aus Polymermassen gebildet ist, **dadurch gekennzeichnet, dass** wenigstens ein Messsystem (7, 7') in eine Polymermasse eingebettet ist.

18. Bodenverbindung eines Fahrzeugs nach Anspruch 16 oder 17, **dadurch gekennzeichnet, dass** die Systeme (7, 7') drahtlose Messsysteme in Oberflächenschallwellen-oder Volumenschallwellen-Technologie sind.

19. Bodenverbindung eines Fahrzeugs nach einem der Ansprüche 16 bis 18, **dadurch gekennzeichnet, dass** die Messsysteme (7, 7') völlig gleich sind.
